# EUROPÄISCHE PATENTSCHRIFT

(11) **EP 0 423 550 B1**
(45) Veröffentlichungstag und Bekanntmachung des Hinweises auf die Patenterteilung: **21.12.1994**
(21) Anmeldenummer: 90119033.0
(22) Anmeldetag: 04.10.1990
(51) Int. Cl.: B29C 61/06, H02G 15/18

(54) **Wärmeschrumpfbare Umhüllung mit einer eigenverstärkten Komponente**
Heat shrinkable covering with reinforcing component
Couverture thermorétractable avec un composant de renfort

(30) Priorität: 20.10.1989 DE 3935045
(43) Veröffentlichungstag der Anmeldung: 24.04.1991
(73) Patentinhaber: RXS Schrumpftechnik-Garnituren GmbH, D-58093 Hagen (DE)
(72) Erfinder: Brudermann, Uwe, Dr., D-2305 Heikendorf (DE); Heier, Manfred, D-5804 Herdecke (DE); Kipfelsberger, Christian, Dr., D-8071 Hepberg (DE)
(74) Vertreter: Fuchs, Franz-Josef, Dr.-Ing.

(56) Entgegenhaltungen:
- EP-A- 0 045 629
- EP-A- 0 385 141
- DE-A- 3 319 120
- GB-A- 2 173 052
- US-A- 3 442 741

## Beschreibung

Die Erfindung betrifft eine wärmeschrumpfbare Umhüllung aus mindestens einer wärmeschrumpfbaren Komponente und aus einer mechanisch verstärkenden Komponente, wobei die verstärkende Komponente mit der wärmeschrumpfbaren Komponente in Verbindung gebracht ist und wobei in der verstärkenden Komponente Risse stoppende Anordnungen eingebracht sind.

Es sind wärmeschrumpfbare Umhüllungen bekannt, die zur Verbesserung der mechanischen Eigenschaften verstärkende Einlagen wie Gewebe oder Gewirke enthalten, wie sie zum Beispiel in der europäischen Anmeldung EP 0 117 026 beschrieben sind. Dort werden sowohl schrumpfbare wie nicht schrumpfbare Gewebe oder Gewirke verwendet, die in einer polymeren Matrix eingebettet werden. Derartige Anordnungen sind relativ schwierig und mit großem Aufwand herzustellen.

Die verstärkende Komponente besteht dort im wesentlichen aus dem schrumpfbaren Gewebe, das plan in einer thermoplastischen Matrix eingebettet ist. Das Gewebe setzt sich dabei aus wärmeschrumpfbaren Fäden zusammen, so daß bei dessen Einlagerung bereits ein schrumpfbares Gebilde vorliegt. Ein Recken ist somit nicht nötig und beim Schrumpfen verändert sich das eingelagerte Gewebe selbst; es zieht sich bei Erwärmung zusammen und bewirktdie Schrumpfung.

In der GB-A-2 173 052 wird ein nicht schrumpfbarer Wärmeschutz aus einem metallischen Gewebe beschrieben, der am Ende einer Kabelmuffe auf den Kabelmantel aufgebracht wird. Der dabei auftretende Überschuß an Schmelzkleber auf der Innenseite des Wärmeschutzes kann durch verteilt angeordnete Schlitze austreten.

Für die vorliegende Erfindung ergibt sich nun die Aufgabe, eine wärmeschrumpfbare Umhüllung zu schaffen, deren mechanische Belastbarkeit, insbesondere auch gegen das Ein- und Weiterreißen verbessert werden soll.

Die gestellte Aufgabe wird mit einer wärmeschrumpfbaren Umhüllung der eingangs erläuterten Art dadurch gelöst, daß die eigenverstärkte Komponente wellenförmig ausgebildet und in der schrumpfbaren Komponente so eingelagert ist, daß Dehn- und Schrumpfbewegungen zerstörungsfrei möglich sind, wobei die Wellung parallel bzw. in jedem beliebigen Winkel zur Dehn- bzw. Schrumpfrichtung verläuft und daß als Risse stoppende Anordnungen in der eigenverstärkten Komponente Sicken, Einstiche, Einschnitte, Löcher oder dergleichen eingebracht sind.

Die Eigenverstärkung der gewellten, eingebetteten, an sich schon verstärkenden Komponente läßt sich zusätzlich verbessern, wenn in diese Komponente neben der Wellung zusätzlich versteifende und Risse stoppende Anordnungen eingebracht werden. Solche Anordnungen lassen sich beispielsweise durch Ausbildung von Einstichen, Einschnitten, Löchern oder dergleichen herstellen. Die Wirkung besteht darin, daß ein eventuell auftretender Riß beim Auftreffen auf eine solche Anordnung gestoppt wird, da an dieser Stelle das Material bereits bewußt in entsprechender Weise unterbrochen ist. Die gleiche Wirkung wird erreicht, wenn Sicken, Ausformungen oder dergleichen in der eingebetteten Komponente eingebracht werden. Weiterhin läßt sich eine Risse stoppende Wirkung auch dadurch erreichen, wenn mehrere Schichten aus verschiedenen Materialien angeordnet sind. Des weiteren ist jede Kombination der aufgezeigten Möglichkeiten denkbar.

Als Materialien kommen alle bisher gebräuchlichen Schrumpfcompounds infrage, die ganz allgemein jede Art von vernetzbaren, kristallinen Thermoplasten umfassen. Geeignet sind hierfür insbesondere hochmolekulare Polyethylene, Polypropylen, Polybuten, Polyethylenterephthalat etc.

Die Erfindung wird nun anhand von fünf Figuren näher erläutert.
- Figur 1: zeigt ein erstes Ausführungsbeispiel mit Einstichen bzw. Schlitzen für die nicht schrumpfbare Komponente.
- Figur 2: zeigt ein zweites Ausführungsbeispiel mit eingebrachten Löchern.
- Figur 3: zeigt ein drittes Ausführungsbeispiel mit eingeprägten Sicken.
- Figur 4: zeigt ein viertes Ausführungsbeispiel mit verschiedenen Schichten.
- Figur 5: zeigt als Beispiel die Einbettung der eigenverstärkten Komponente z.B. in einer schrumpfbaren Komponente.

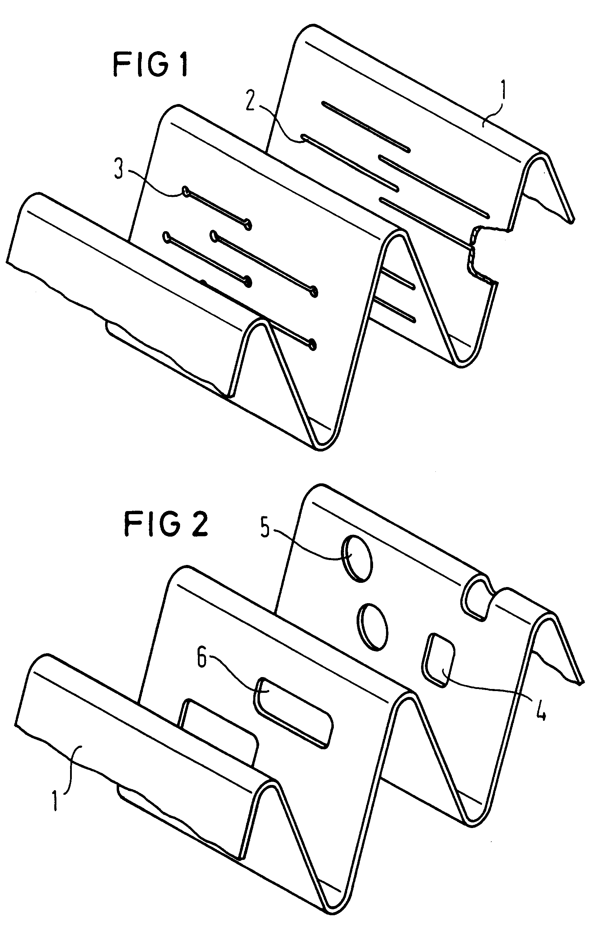

Die Figur 1 zeigt eine mechanisch verstärkende Komponente 1, die in eine schrumpfbare Komponente zum Zwecke der Erhöhung der mechanischen Eigenschaften einer schrumpfbaren Umhüllung eingebettet wird. Diese eingebettete Komponente 1 ist in Wellenform ausgebildet, wobei die Wellrichtung bei der Einlagerung in die schrumpfbare Komponente parallel bzw. in jedem beliebigen Winkel zur Dehn- bzw. Schrumpfrichtung der gesamten Umhüllung verläuft. Auf diese Weise kann die eigenverstärkte Komponente 1 den Bewegungsrichtungen im Dehn- bzw. Schrumpfprozeß zerstörungsfrei folgen, wenn die Wellung dem Schrumpfungsgrad entsprechend angepaßt ist. Zur Erhöhung der Eigenfestigkeit gegen mechanische Beanspruchungen, insbesondere gegen Rißbildung, sind nun in dieser Komponente 1 zusätzlich gezielt Einstiche 2, die zum Beispiel an den Enden mit abrundenden Einschnitten 3 versehen sind, als Risse stoppende Anordnung in geeigneter, zum Beispiel versetzter Weise angeordnet. Durch diese gezielt eingebrachte Anordnung kann sich beispielsweise ein Riß bis zu einem solchen Schlitz ausbreiten; hier wird er jedoch gestoppt, da die Gegenseite des Schlitzes nicht vom anwandernden Riß beeinflußbar ist.

Die Figur 2 zeigt eine weitere Ausbildung von Risse stoppenden Anordnungen in der Komponente 1 in Form von Löchern 4, 5 und 6 verschiedener Gestalt. Hier werden im Gegensatz zur linienförmigen Anordnung Risse aus verschieden anlaufenden Richtungen gestoppt.

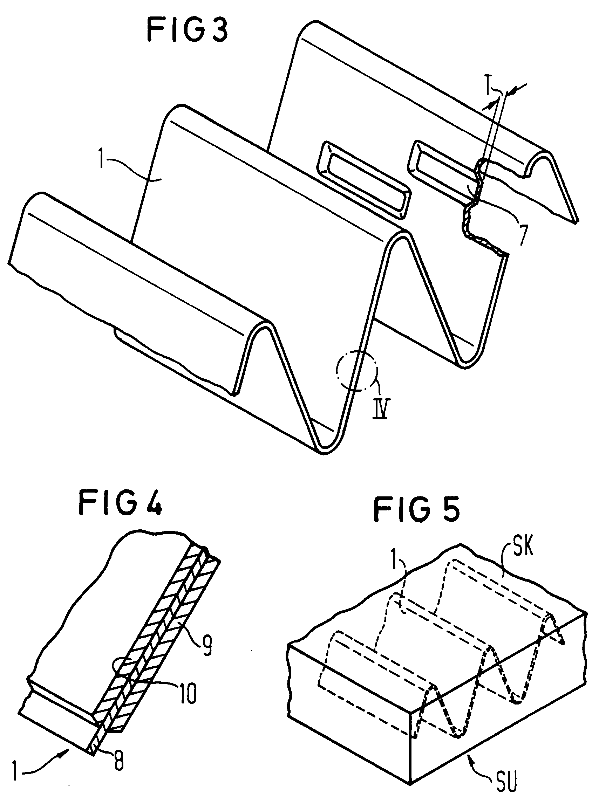

Die Figur 3 zeigt eine weitere Ausbildung, bei der als Risse stoppende Anordnungen Sicken 7 oder auch Prägungen mit entsprechender Tiefe T in der Komponente 1 angebracht sind. So sind in ähnlicher Weise auch Materialverdickungen hierfür geeignet.

Figur 4 zeigt einen Querschnitt IV aus Figur 3, aus dem hervorgeht, daß sich auch Anordnungen treffen lassen, die aus mehreren Schichten 8, 9 und 10 als Verbundfolie gebildet sind, wobei diese Schichten vorzugsweise aus verschiedenen Materialien bestehen.

Selbstverständlich lassen sich auch die verschiedenen Anordnungen in entsprechender Weise miteinander kombinieren. Auch ist die Rund-Wellung nicht zwingend vorgegeben; es lassen sich auch andere geometrische Formen der eigenverstärkten Komponente 1 ausbilden, mit denen ebenfalls eine Dehnung oder Schrumpfung zerstörungsfrei erfolgen kann.

Diese eigenverstärkte Komponente 1 wird nun, wie beispielsweise in Figur 5 gezeigt wird, in die schrumpfende Komponente SK aus vorzugsweise einem vernetzten und geweiteten Polyolefin, wie zum Beispiel einem hochmolekularen Polyethylen oder Polybuten eingelagert.

Doch ist auch möglich, daß die eigenverstärkte Komponente 1 je nach der geometrischen Struktur vollflächig, linienförmig oder nur in Teilbereichen mit der schrumpfenden Komponente SK verbunden wird. Hierzu können auch Haftvermittler, zum Beispiel Schmelzkleber verwendet werden. Die Wanddicken der einzelnen Schichten können je nach Bedarf unterschiedlich sein. Die für die Schrumpffähigkeit nötige Vernetzung des später schrumpfbaren Materials kann entweder durch chemische Vernetzungsmethoden oder eine Strahlenvernetzung ausgeführt werden.

Für die eigenverstärkte Komponente 1 können sowohl nicht schrumpfbare als auch schrumpfbare Kunststoffmaterialien verwendet werden, soweit sie den oben beschriebenen Anforderungen genügen.

## Patentansprüche

1. Wärmeschrumpfbare Umhüllung (SU) aus mindestens einer wärmeschrumpfbaren Komponente (SK) und aus einer mechanisch verstärkenden Komponente (1), wobei die verstärkende Komponente mit der wärmeschrumpfbaren Komponente (SK) in Verbindung gebracht ist und in der verstärkenden Komponente (1) Risse stoppende Anordnungen eingebracht sind,
**dadurch gekennzeichnet,**
daß die eigenverstärkte Komponente (1) wellenförmig ausgebildet und in der schrumpfbaren Komponente (SK) so eingelagert ist, daß Dehn- und Schrumpfbewegungen zerstörungsfrei möglich sind, wobei die Wellung parallel bzw. in jedem beliebigen Winkel zur Dehn- bzw. Schrumpfrichtung verläuft und daß als Risse stoppende Anordnungen in der eigenverstärkten Komponente (1) Sicken (7), Einstiche (2), Einschnitte (3), Löcher (4, 5, 6) oder dergleichen eingebracht sind.

2. Wärmeschrumpfbare Umhüllung nach einem der vorhergehenden Ansprüche, **dadurch gekennzeichnet**, daß die schrumpfbare Komponente (SK) als Verbundfolie (8-9-10) ausgebildet ist.

3. Wärmeschrumpfbare Umhüllung nach Anspruch 2, **dadurch gekennzeichnet**, daß die schrumpfbare Komponente (SK) mit Sicken (7), Einstichen (2), Einschnitten (3), Löchern (4, 5, 6) o dergleichen versehen ist.

4. Wärmeschrumpfbare Umhüllung nach einem der vorhergehenden Ansprüche, **dadurch gekennzeichnet**, daß bei der als Verbundfolie aufgebauten eigenverstärkten Komponente nur jeweils die äußeren Schichten (9, 10) mit Einstichen (2), Enschnitten (3),Löchern (4, 5, 6) oder dergleichen versehen sind.

5. Wärmeschrumpfbare Umhüllung nach einem der vorhergehenden Ansprüche, **dadurch gekennzeichnet**, daß die eigenverstärkte Komponente außer flächig auch in jeder anderen geometrichen Form als der gewellten Form ausgebildet sein kann.

6. Wärmeschrumpfbare Umhüllung nach einem der vorhergehenden Ansprüche, **dadurch gekennzeichnet**, daß die einzelnen Schichten der eigenverstärkten Komponente vorzugsweise mittels eines Haftvermittlers verbunden sind.

7. Wärmneschrumpfbare Umhüllung nach Anspruch 6, **dadurch gekennzeichnet**, daß die einzelnen Schichten der eigenverstärkten Komponente mittels eines Schmelzklebers verbunden sind.

8. Wärmeschnrumpfbare Umhüllung nach einem der vorhergehenden Ansprüche, **dadurch gekennzeichnet**, daß die Anbindung der Deckschichten je nach geometricher Strukctur der eigenverstärkten Komponente vollflächig, linienförmig oder in Teilbereichen erfolgen kann.

9. Wärmeschrumpfbare Umhüllung nach einem der vorhergehenden Ansprüche, **dadurch gekennzeichnet**, daß die eigenverstärkte Komponente und/oder die schrumpfbare Komponente vorzugsweise aus einem vernetzten und geweiteten Polyolefin, insbesondere einem hochmolekularen Polyethylen oder Polybuten, besteht.

10. Wärmeschrumpfbare Umhüllung nach einem der vorhergehenden Ansprüche, **dadurch gekennzeichnet**, daß die einzelnen Schichten der Umhüllung (SU) unterschiedliche Wanddicken besitzen.

11. Wärmeschrumpfbare Umhüllung nach einem der vorhergehenden Ansprüche, **dadurch gekennzeichnet**, daß die einzelnen Schichten der Umhüllung (SU) unterschiedlich chemisch oder durch Strahlen vernetzt sind.

12. Wärmeschrumpfbare Umhüllung nach einem der vorhergehenden Ansprüche, **dadurch gekennzeichnet** daß die eigenverstärkte Komponente (1) wärmeschrumpffähig ist.

## Claims

1. Heat-shrinkable covering (SU) comprising at least one heat-shrinkable component (SK) and a mechanically reinforcing component (1), the reinforcing component being brought into connection with the heat-shrinkable component (SK) and arrangements stopping tears being incorporated in the reinforcing component (1), characterized in that the intrinsically reinforced component (1) is of a corrugated design and is incorporated in the shrinkable component (SK) in such a way that expansion and shrinkage movements are possible non-destructively, the corrugation running parallel or at any desired angle with respect to the direction of expansion or shrinkage and in that beads (7), punctures (2), incisions (3), holes (4, 5, 6) or the like are made in the intrinsically reinforced component (1) as arrangements stopping tears.

2. Heat-shrinkable covering according to one of the preceding claims, characterized in that the shrinkable component (SK) is designed as a composite film (8-9-10).

3. Heat-shrinkable covering according to Claim 2, characterized in that the shrinkable component (SK) is provided with beads (7), punctures (2), incisions (3), holes (4, 5, 6) or the like.

4. Heat-shrinkable covering according to one of the preceding claims, characterized in that in the intrinsically reinforced component, constructed as a composite film, in each case only the outer layers (9, 10) are provided with punctures (2), incisions (3), holes (4, 5, 6) or the like.

5. Heat-shrinkable covering according to one of the preceding claims, characterized in that the intrinsically reinforced-component may be designed not only in a sheet-like form but also in any geometrical form other than the corrugated form.

6. Heat-shrinkable covering according to one of the preceding claims, characterized in that the individual layers of the intrinsically reinforced component are preferably joined by means of an adhesion promoter.

7. Heat-shrinkable covering according to Claim 6, characterized in that the individual layers of the intrinsically reinforced component are joined by means of a hot-melt adhesive.

8. Heat-shrinkable covering according to one of the preceding claims, characterized in that the joining-on of the outer layers can take place over the full surface, in linear form or in partial regions, depending on the geometrical structure of the intrinsically reinforced component.

9. Heat-shrinkable covering according to one of the preceding claims, characterized in that the intrinsically reinforced component and/or the shrinkable component preferably comprise a crosslinked and expanded polyolefin, in particular a high-molecular-weight polyethylene or polybutene.

10. Heat-shrinkable covering according to one of the preceding claims, characterized in that the individual layers of the covering (SU) have different wall thicknesses.

11. Heat-shrinkable covering according to one of the preceding claims, characterized in that the individual layers of the covering (SU) are differently crosslinked, chemically or by radiation.

12. Heat-shrinkable covering according to one of the preceding claims, characterized in that the intrinsically reinforced component (1) is capable of heat shrinkage.

## Revendications

1. Enveloppe (SU) thermorétractable constituée d'au moins un constituant (SK) thermorétractable et d'un constituant (1) de renfort mécanique, le constituant de renfort étant mis en liaison avec le constituant (SK) thermorétractable et des dispositifs arrêtant les fissures étant mis en place dans le constituant de renfort,
caractérisée
en ce que le constituant (1) de renfort proprement dit est sous forme d'ondulation et est inséré dans le constituant (SK) rétractable, de façon que des mouvements de dilatation et de retrait soient possibles sans provoquer de destruction, les ondulations s'étendant parallèlement à la direction de dilatation ou de retrait ou en faisant un angle quelconque avec celle-ci et comme dispositif arrêtant les fissures, il est mis en place dans le constituant (1) de renfort proprement dit des moulures (7), des encoches (2), des entailles (3), des trous (4, 5, 6) ou analogues.

2. Enveloppe thermorétractable suivant l'une des revendications précédentes, caractérisée en ce que le constituant (SK) rétractable est constitué sous la forme d'une feuille composite (8,9,10).

3. Enveloppe thermorétractable suivant la revendication 2, caractérisée en ce que le constituant (SK) rétractable est muni de nervures (7), d'encoches (2), d'entailles (3), de trous (4,5,6) ou analogues.

4. Enveloppe thermorétractable suivant l'une des revendications précédentes, caractérisée en ce que, lorsque le constituant de renfort proprement dit est constitué d'une feuille composite, seules les couches (9,10) extérieures sont munies d'encoches (2), d'entailles (3), de trous (4, 5, 6) ou analogues.

5. Enveloppe thermorétractable suivant l'une des revendications précédentes, caractérisée en ce que le constituant de renfort proprement dit peut avoir également à l'extérieur et en surface toute autre forme géométrique autre que la forme ondulée.

6. Enveloppe thermorétractable suivant l'une des revendications précédentes, caractérisée en ce que les diverses couches du constituant de renfort proprement dit sont reliées de préférence au moyen d'un adhésif.

7. Enveloppe thermorétractable suivant la revendication 6, caractérisée en ce que les diverses couches du constituant de renfort proprement dit sont reliées au moyen d'une colle fusible.

8. Enveloppe thermorétractable suivant l'une des revendications précédentes, caractérisée en ce que la liaison des couches de finition peut s'effectuer suivant la structure géométrique du constituant de renfort proprement dit suivant toute la surface, suivant une forme linéaire ou dans certaines parties.

9. Enveloppe thermorétractable suivant l'une des revendications précédentes, caractérisée en ce que le constituant de renfort proprement dit et/ou le constituant rétractable sont, de préférence, en une polyoléfine réticulée et étirée, notamment en polyéthylène ou en polybutène de haut poids moléculaire.

10. Enveloppe thermorétractable suivant l'une des revendications précédentes, caractérisée en ce que les diverses couches de l'enveloppe (SU) ont des épaisseurs de paroi différentes.

11. Enveloppe thermorétractable suivant l'une des revendications précédentes, caractérisée en ce que les diverses couches de l'enveloppe (SU) sont réticulées chimiquement ou par rayonnement de manière différente.

12. Enveloppe thermorétractable suivant l'une des revendications précédentes, caractérisée en ce que le constituant (1) de renfort proprement dit est susceptible de se thermorétracter.
